# EUROPÄISCHE PATENTSCHRIFT

(11) **EP 2 326 692 B1**
(45) Veröffentlichungstag und Bekanntmachung des Hinweises auf die Patenterteilung: **23.10.2013**
(21) Anmeldenummer: 09783123.4
(22) Anmeldetag: 17.09.2009
(51) Int. Cl.: C09J 131/04, C08K 5/151

(54) **WÄSSRIGER DISPERSIONS-KLEBSTOFF AUF BASIS VON POLYVINYLACETAT**
AQUEOUS DISPERSION ADHESIVE COMPOSITION BASED ON POLYVINYL ACETATE
COMPOSITION ADHESIVE EN DISPERSION AQUEUSE À BASE D'ACÉTATE DE POLYVINYL

(30) Priorität: 19.09.2008 DE 102008048106
(43) Veröffentlichungstag der Anmeldung: 01.06.2011
(73) Patentinhaber: Henkel AG & Co. KGaA, 40589 Düsseldorf (DE)
(72) Erfinder: BACHON, Thomas, 40597 Düsseldorf (DE); GRÜNEWÄLDER, Bernhard, 40721 Hilden (DE); SOMMER, Oliver, 40593 Düsseldorf (DE); NEß, Birgit, 40764 Langenfeld (DE); SCHRÖDER, Kerstin, 41516 Grevenbroich/Wevelinghoven (DE); BÄUMER, Ulrich, 41470 Neuss (DE); BREVES, Roland, 40822 Mettmann (DE); WAGENBLAßT, Dagmar, 32457 Porta Westfalica (DE)
(86) Internationale Anmeldenummer: PCT/EP2009/062057
(87) Internationale Veröffentlichungsnummer: WO 2010/031814

(56) Entgegenhaltungen:
- WO-A1-00/66660
- WO-A1-2008/110242
- US-A- 3 547 771
- US-A- 4 322 322
- US-A1- 2007 048 337
- HAAG A P ET AL: "Bacterially derived wood adhesive" INTERNATIONAL JOURNAL OF ADHESION AND ADHESIVES, ELSEVIER, Bd. 26, Nr. 3, 1. Juni 2006 (2006-06-01), Seiten 177-183, XP025097857 ISSN: 0143-7496 [gefunden am 2006-06-01]

## Beschreibung

Die Erfindung betrifft einen wässrigen Dispersions-Klebstoff auf der Basis von Polyvinylacetat als Bindemittel sowie seine Verwendung.

Der Einsatz von Klebstoffen bei der Fertigung industrieller Güter verdrängt in zunehmendem Maße mechanische Befestigungsmittel. Dies geschieht insbesondere dort, wo die Verbindung zweier Werkstücke nur moderaten mechanischen Belastungen ausgesetzt ist. Der Vorteil des Einsatzes von Klebstoffen zur Herbeiführung mechanischer Verbindungen liegt insbesondere in der einfachen Anwendung der Klebstoffe, der Möglichkeit die Verbindung von Werkstoffen kontinuierlich und gewünschtenfalls vollflächig zu betreiben und der hohen Belastbarkeit moderner Klebstoffe, wie sie beispielsweise in der Möbelindustrie oder in der Fahrzeugindustrie zum Einsatz kommen.

Häufig kommen in diesem Bereich Dispersionsklebstoffe mit wasserdispergierbaren Polymeren, wie sie beispielsweise durch Emulsionspolymerisation von ethylenisch ungesättigten Monomeren in wässriger Phase erhältlich sind, zum Einsatz. Mit der zunehmenden Ausbreitung von Klebstoffen bei der Herstellung von hochwertigen Gegenständen tritt jedoch auch die Qualität der Klebstoffe selbst in den Vordergrund. Besonders bei der Herstellung hochwertiger Möbel sind die Hersteller darauf angewiesen, dass die eingesetzten Klebstoffe alle geforderten Normen erfüllen, so dass Möbelstücke keinen Qualitätsmängel aufgrund qualitativ minderwertiger Klebstoffe zeigen.

Dispersions-Klebstoffe auf Basis von Polyvinylacetat werden unter anderem zum Verkleben von Holz verwendet (Holz-Leime). Ihre Viskosität liegt zwischen 3 und 40 Pa.s nach Brookfield (nach DIN /EN/ ISO 2555). Mit diesem Viskositätsbereich sind folgende Vorteile verbunden: Die Dispersionen lassen sich leicht mit der Hand auch großflächig verteilen. Sie sind maschinengängig. Sie penetrieren teilweise in das zu verleimende Substrat und führen daher zu einer hohen Festigkeit. Nachteilig an solchen Klebstoffen ist jedoch, dass zum Erreichen hoher Wasserfestigkeiten oft Zusatzstoffe eingesetzt werden müssen.

So beschreibt beispielsweise die GB-A 1,440,337 einen Klebstoff, der über eine lange Lagerfähigkeit verfügen und gegenüber Feuchtigkeit beständig sein soll. Der beschriebene Klebstoff enthält ein Vinylester-Polymeres, Polyvinylalkohol als Schutzkolloid, ein wasserlösliches Harnstoff-Formaldehydharz mit einem niedrigeren Kondensationsgrad und ein wasserlösliches, saures Metallsalz. Aus den in der Schrift offenbarten Beispielen ergibt sich jedoch, dass der entsprechende Klebstoff den Anforderungen, wie sie in modernen Klebstoffanwendungen in Bezug auf Wasserfestigkeit auftreten, nicht gewachsen ist.

Die EP-B 0 686 682 beschreibt einen Dispersionsklebstoff auf Polyvinylester-Basis, dessen Verfilmungen eine erhöhte Wasserresistenz aufweisen. Zu diesem Zweck wird eine wässrige Polyvinylester-Dispersion eingesetzt, die neben polymeren Schutzkolloiden wasserlösliche, mit den polymeren Schutzkolloiden komplexierbare Verbindungen und Derivate von Polyaldehyden enthält, aus denen in sauren Medien Aldehydgruppen kontrolliert freisetzbar sind. Nachteilig wirkt sich beim oben genannten Stand der Technik insbesondere die Tatsache aus, dass die beschriebenen Klebstoffe entweder nicht die gestellten Anforderungen bezüglich der Wasserfestigkeit erfüllen oder als Vernetzungsmittel niedermolekulare Polyaldehyde, entweder in freier Form oder beispielsweise als Bisulfitaddukt, benötigen.

Die WO2003/000818 A2 schlägt einen Mehrkomponentenklebstoff vor, dessen eine Komponente eine Polymerdispersion enthält, in der einen Komponente neben dem Polymeren ein Schutzkolloid und ein saures Metallsalz, wie beispielsweise Aluminiumchlorid, und der eine zweite Komponente enthält, die mindestens ein Vernetzerharz aufweist. Zur Anwendung des dort beschriebenen Mehrkomponentenklebstoffs werden die einzelnen Komponenten miteinander vermischt, wodurch sich der eigentliche, die Klebekraft entfaltende Klebstoff ergibt.

WO 2008/110242 A1 beschreibt eine zweikomponenten Zusammensetzung, die als Klebstoff für Holz Anwendung findet. Die erste Komponente enthält eine wässrige Dispersion eines N-Methylolacrylamidgruppen-enthaltenden Polyvinylacetats, ein Schutzkolloid und AlCl₃. Der Klebstoff weist eine erhöhte Wasserbeständigkeit und verlängerte Topfzeit auf.

Ausgehend von diesem Stand der Technik bestand die Aufgabe darin, einen Dispersions-Klebstoff auf der Basis von Polyvinylacetat mit guter Wasserfestigkeit, gemessen nach DIN EN 204, einer Wärmefestigkeit nach DIN EN 14257 von mehr als 5 N/mm², einer langen "offenen Zeit" ohne Einbußen der Abbindezeit zur Verfügung zu stellen, der auch die übrigen Anforderungen an Holzleime erfüllt. Dazu zählen z.B. folgende Eigenschaften: praxisnahe, einfache Verarbeitung, hoher Holzbruch und geringer bzw. kein Lösungsmittelgehalt sowie eine minimale Film-bildende-Temperatur (MFT) unter 15°C, um die Verarbeitung auch bei Raumtemperaturen zu ermöglichen. Selbstverständlich soll der Dispersions-Klebstoff auch ausreichend lagerstabil sein.

Die erfindungsgemäße Lösung ist den Patentansprüchen zu entnehmen. Sie besteht im Wesentlichen in der Bereitstellung eines wässrigen Dispersions-Klebstoffs auf der Basis von Polyvinylacetat als Bindemittel, der weniger als 4 Gew.-% an organischem Lösemittel enthält und der dadurch gekennzeichnet ist, dass er 0,1 bis 10,0 Gew.-% eines oder mehrerer oxidierter Kohlenhydrate, bezogen auf die Dispersion, enthält.

Vorzugsweise werden die oxidierten Kohlenhydrate ausgewählt aus oxidierten Pentosen, Hexosen oder Desoxyzuckern (Desosen) oder deren Mischungen. Diese Zucker weisen gegenüber längerkettigen Kohlenhydraten wie beispielsweise Starken und Cellulosen den Vorteil auf, dass sich mit ihnen die Viskosität der Dispersionen leichter steuern lässt.
Als oxidierte Pentosen kommen oxidierte Arabinose, Xylose, Lyxose, Ribose oder deren Mischungen in Frage. Die oxidierten Hexosen können ausgewählt werden aus oxidierter Allose, Altrose, Glucose, Mannose, Gulose, Idose, Galaktose, Talose oder deren Mischungen. Für die oxidierten Desoxyzucker können die oxidierte 2-Desoxyribose, Rhamnose, Digitoxose, Fucose oder deren Mischungen verwendet werden.
Es können auch Mischungen aus allen vorgenannten oxidierten Kohlenhydraten ggf. zusammen mit oxidiertem Dextrin eingesetzt werden. Ganz besonders bevorzugt sind die folgenden oxidierten Kohlenhydrate: Glucono-1,5-lacton, Glucono-1,4-lacton, Gluconsäure, Mannonsäure, Galactono-1,4-lacton, Gulono-1,4-lacton, Glucurono-1,4-lacton, Glucuronsäure, Mannuronsäure, Galacturonsäure oder deren Mischungen. Die oxidierten Kohlenhydrate werden in Mengen von 0,1 bis 10 Gew.% , vorzugsweise 0,1 bis 5,0 Gew.%, besonders bevorzugt 0,5 bis 5,0 Gew.% und ganz besonders bevorzugt 0,5 bis 3,0 Gew.% bezogen auf die Klebstoffzusammensetzung eingesetzt.

Unter "Polyvinylacetat" als Bindemittel sind Homo- und Copolymerisate des Vinylacetats zu verstehen, die vorzugsweise mehr als 80, insbesondere mehr als 88 Gew.-% an Vinylacetat, bezogen auf die Monomeren insgesamt enthalten. Als Comonomere kommen in Frage: Ethylen (Poly-Ethylenvinylacetat), Maleinsäureester mit Alkoholen bis zu 12 C-Atomen sowie die Ester des Vinylalkohols mit Carbonsäuren mit 2 bis 12, insbesondere 2 bis 5 C-Atomen, Ester der Methacrylsäure und / oder Acrylsäure mit Alkoholen mit bis zu 12 C-Atomen, Acrylamid, Methacrylamid. Comonomere können aus verschiedenen Gründen verwendet werden, z.B. um die Glastemperatur herabzusetzen, wobei die Elastizität des Bindemittels vergrößert wird. Zweckmäßigerweise können auch reaktive Comonomere mit verwendet werden, um die Wasserfestigkeit zu verbessern, so genannte D3-Leime. Beispiele für reaktive Comonomere sind Isobutoxymethylacrylamid bzw. andere Ester mehrwertiger Alkohole, aber vor allem N-Methylolacrylamid. Diese können ggf. in Kombination mit geringen Mengen von sauren Salzen als Katalysator, z.B. von Lewis-Säuren und Schutzkolloiden (in der Regel Polyvinylalkohol oder teilweise hydrolysierte Polyvinylacetat-Ethylen-Copolymere) verwendet werden.

Gegebenenfalls können die Polyvinylacetatdispersionen mit weiteren Polymer-Dispersionen oder Emulsionen gemischt werden. Beispiele hierfür sind Polyacrylat- oder Polymethacrylat-Dispersionen enthaltend Homo- oder Copolymere von C, bis C₁₂-Alkylestern der Acrylsäure oder Methacrylsäure. Ebenso können Styrol- Homopolymerdispersionen oder Copolymere mit den vorgenannten (Meth)acrylaten oder Ethylenvinylacetat- Copolymerdispersionen (EVA) mit verwendet werden. Der Anteil dieser Dispersionen kann 0 bis 50 Gew.%, bezogen auf die Gesamtformulierung betragen.

Die erfindungsgemäßen Klebstoffe enthalten weniger als 4, insbesondere weniger als 3 und vor allem weniger als 1,5 Gew.-%, organische Lösungsmittel, bezogen auf die Dispersion; besonders bevorzugt enthalten sie keine hoch siedenden Lösungsmittel. Unter einem "hoch siedenden Lösemittel" soll ein Lösemittel mit einem Siedepunkt bei Normaldruck von mehr als 160 °C, insbesondere mehr als 200 °C und vor allem mehr als 240 °C verstanden werden. Geeignete Lösemittel sind z.B.: Diethylenglycol und seine Ester oder Ether mit insgesamt bis zu 18 C-Atomen. Konkret seien genannt: Butyldiglycolacetat, Polysolvan O, Dibutylphthalat, Dimethylphthalat, Di-(butylglycol)-phthalat, Benzylbutylphthalat, Propylglycolbenzoat, Diisobutylphthalat, Zitronensäure, Benzoesäureester, Sebacinsäureester, Diisoxylylphthalat, Diglycol, Methyl-Diglycol, Diglyme, Carbitol, Di-Ethyl-Diglycol, Ethyl-Diglycol-Acetat, Butyl-Diglycol, Di-Butyl-Diglycol und Butyl-Diglycol-Acetat. Andere hoch siedende Lösungsmittel sind beispielsweise Propylencarbonat und Glycerintriacetat (Triacetin). Zum Teil haben die oben genannten Verbindungen weichmachende Eigenschaften oder verlängern die offene Zeit des Klebstoffes oder beeinflussen die MFT.

Außerdem können die erfindungsgemäßen Dispersionsklebstoffe andere Hilfsmittel wie beispielsweise Füllstoffe, Rheologiehilfsmittel, Netzmittel, Entschäumer, Filmbildehilfsmittel, Weichmacher, Konservierungsmittel enthalten. Weichmacher und Konservierungsmittel werden als Zusätze oft als kritisch angesehen, in Bezug auf technische Eigenschaften und Umwelteinflüsse der Klebstoffzusammensetzung sollten sie deshalb in möglichst geringen Anteilen oder gar nicht eingesetzt werden.

Als Füllstoffe eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Flint, Glimmer, Fasern (mineralisch oder synthetisch) und Holzmehle (wie Bambuspulver). Die Mengen an eingesetzten Füllstoffen kann 0 bis 50 Gew.%, bezogen auf die Gesamtzusammensetzung der Klebstoffzubereitung betragen.

Als Rheologiehilfsmittel können prinzipiell alle bekannten Mittel, wie z.B. Bentone, pyrogene Kieselsäuren, Harnstoffderivate, Polyamidwachse, gehärtete Fettsäurederivate, fibrillierte oder Pulp-Kurzfasern in Mengen von 0 bis 4 Gew.%, bezogen auf die Gesamtzusammensetzung der Klebstoffzubereitung, verwendet werden. Besonders bevorzugt sind die pyrogenen Kieselsäuren.

Übliche Entschäumer und /oder Netzmittel werden in Mengen von je 0 bis 1 Gew.% bezogen auf die Gesamtzusammensetzung der Klebstoffzubereitung verwendet.

Konservierungsmittel können in Mengen bis zu 0,2 Gew.% eingesetzt werden. Bevorzugt werden weniger als 0,1 Gew.%, bezogen auf die Gesamtzusammensetzung der Klebstoffzubereitung, oder keine Konservierungsmittel eingesetzt.

Die vorgenannten Filmbildehilfsmittel wie hoch siedende Lösungsmittel und / oder Weichmacher können jeweils in Mengen von 0 bis zu 4 Gew.%, , bezogen auf die Gesamtzusammensetzung der Klebstoffzubereitung eingesetzt werden.

Die erfindungsgemäßen wässrigen Dispersions-Klebstoffe können somit typischerweise enthalten: Polyvinylacetatdispersion 99,9 - 50 Gew.%, vorzugsweise 99,5 - 97 Gew.%,
weitere Polymer-Dispersionen oder Emulsionen 0 - 50 Gew.%,
Oxidiertes Kohlenhydrat 0,1 - 10 Gew.%, vorzugsweise 0,5 - 3 Gew.%
Füllstoffe 0 - 50 Gew.%,
Rheologiehilfsmittel 0 - 4 Gew.%,
Entschäumer und /oder Netzmittel jeweils 0 -1 Gew.%,
Konservierungsmittel 0 - 0,2 Gew.%,
wobei sich die Summe der Gesamtbestandteile der Zubereitung auf 100 Gew.% ergänzt und die Polymerdispersionen Festkörpergehalte (Feststoffgehalte) zwischen 25 und 65 Gew.% aufweisen.

Die erfindungsgemäßen Dispersions-Klebstoffe zeichnen sich im Wesentlichen durch folgende positive Eigenschaften aus:
- lange offene Zeit,
- gutes Abbindeverhalten,
- gute Wasserfestigkeit
- gute Wärmestandfestigkeit und
- geringer oder kein Gehalt an Lösungsmitteln, insbesondere hoch siedenden Lösemitteln.

Die erfindungsgemäßen Dispersions-Klebstoffe eignen sich insbesondere zum Verkleben von Holz- und Holzwerkstoffen oder deren Kombinationsverklebungen wie z.B. HPL / Holz (HPL = high-pressure-laminate).

Grundsätzlich können alle im Rahmen des vorliegenden Textes beschriebenen Ausführungsformen, Anteilsbereiche, Bestandteile und sonstigen Merkmale des erfindungsgemäßen wässrigen Dispersions-Klebstoffs und der erfindungsgemäßen Verwendung in allen möglichen und sich nicht gegenseitig ausschließenden Kombinationen verwirklicht werden. Kombinationen von als bevorzugt ausgewiesenen Merkmalen sind ihrerseits ebenfalls erfindungsgemäß bevorzugt.

In den nachfolgenden Ausführungsbeispielen soll die Erfindung näher erläutert werden, wobei die Auswahl des Beispiels keine Beschränkung des Umfangs des Erfindungsgegenstandes darstellen soll.

### Beispiele

### Herstellung der Dispersions-Klebstoffe

Es wurde eine Polyvinylacetat - Dispersion mit einem Festkörper gehalt von 50% hergestellt:

### Beschreibung des Verfahrens:

Wasser, Exceval, Mowiol (Polyvinylalkohol = PVOH) werden im Vorlöser auf ca. 90°C erwärmt und gelöst. Die PVOHs müssen komplett gelöst sein. Monomer wird separat vorbereitet. NaAcetat (Pufferlösung), Weinsäure-Lösung (Reduktionsmittel zur Bildung des Redox-Systems mit H₂O₂) werden kurz vor dem Reaktionsstart in den Reaktor gegeben. Bei 60°C wird eine Monomervorlage (5% Monomer) vorgelegt und mit H₂O₂ die Reaktion gestartet. Die Reaktionstemperatur steigt auf 75°C und wird bei 75°C gehalten. Nach ca. 10 - 20 min wird das restliche Vinylacetat in 180min zudosiert. Parallel dazu wird der restliche Initiator dosiert. Nach Monomerende lässt man 30 min "Reifen", dann wird die Nachreaktion gestartet mit t-Butylhydroperoxid/ Ascorbinsäure. Die Temperatur steigt über 80°C. Nach 60 min wird die Kühlung eingeschaltet und unter 40°C das Glucono-delta-1,5-lacton hinzugefügt.

### Basispolymer Beispiele 1-5

| **Rohstoff** | | |
|---|---|---|
| Weichwasser | Vorlösung | 41,535 |
| Exceval RS - 2117 | Vorlösung | 3,500 |
| Mowiol 30 - 92 | Vorlösung | 0,500 |
| | | |
| NaAcetat | Vorlösung | 0,070 |
| Weichwasser | Vorlösung | 2,000 |
| | | |
| Vinylacetat | Monomerbehälter | 46,530 |
| | | |
| Weinsäure | Co-Initiator-Lösung | 0,096 |
| Weichwasser | Co-Initiator-Lösung | 0,750 |
| | | |
| H₂O₂ | Initiatorlösung Initiatorbehälter | 0,154 |
| Weichwasser | Initiatorlösung Initiatorbehälter | 3,000 |
| | | |
| t-Butylhydroperoxid | Initiatorlösung Nachreaktion | 0,050 |
| Weichwasser | Initiatorlösung Nachreaktion | 0,500 |
| Ascorbinsäure | Initiatorlösung Nachreaktion | 0,075 |
| Weichwasser | Initiatorlösung Nachreaktion | 1,000 |
| | | |
| Glucono-delta-1,5-lacton | 1-3 % (Beispiele 2-5) | |
| Weichwasser | | 0,240 |
| **Summe** | | **100,000** |

### Prüfmethoden:

### Bestimmung der Viskosität :

Brookfield Digital Viscometer RTVDV-II bei 23°C
Viskositätsmessung nach EN ISO 2555
Gemessen mit Spindel 6 bei 20 Upm und 23°C

Die Angabe erfolgt in mPas

### Bestimmung der offenen Zeit:

Die Messung erfolgt an konditionierter, ungedämpfter massiver Buche (Fagus sylvatica) mit einer Holzfeuchte von 8-10 % und einem Klebstoffauftrag von 150µ und 200µ.

Zur Messung wird unter konstanten klimatischen Bedingungen bei 23°C und 50 % r.F. durchgeführt. Der zu prüfende, bei 23°C gelagerte, Klebstoff wird mit einem 150 µ und 200 µ Spiralrakel aufgetragen. Im Abstand von einer Minute wird der Klebstofffilm auf Hautbildung getestet. Ist eine Hautbildung zu erkennen, wird von dem ermittelten Wert eine Minute abgezogen. Es wird ein Mittelwert von 150 und 200 µ gebildet.

Die Angabe erfolgt in Minuten.

### Bestimmung der MFFT (Minimale Filmbildetemperatur):

MFT nach DIN 537871 / ISO 2115

Die Angabe erfolgt in °C

### Bestimmung der Abbindegeschwindigkeit nach 20 min. (ABG)

Die Prüfung erfolgt an stumpf verleimter massiver, bei 23°C und 50 % relativer Luftfeuchte gelagerter, ungedämpfter und gehobelter Buche (Fagus sylvatica) mit einer Holzfeuchtigkeit von 8 bis 9 %. Dazu werden 5 Buchenhölzer mit den Maßen Länge=20 cm, Breite=4 cm, Dicke=2 cm mit den Schmalseiten so aneinandergeleimt, dass eine Gesamtfläche von 20 mal 20 cm entsteht. Die einzelnen Buchenhölzer sind jeweils am Kopfende 24 mm tief, im Winkel von 20° schräg abgeschnitten, sodass bei der Verleimung der Einzelteile ein gleichschenkliger Keilausschnitt mit einem Gesamtwinkel beider Schenkel von 40° entsteht, der eine Tiefe von 24 mm und eine breite Schulter von 18,5 mm hat. So entsteht an jeder Klebefuge ein Keilausschnitt von 2 cm Breite.

Die Prüfhölzer sind vor der Prüfung für mindestens 2 Wochen unter konstanten Bedingungen bei 23°C 50 % r.F. zu konditionieren, um sicherzustellen, dass sich eine Ausgleichsholzfeuchte zwischen 8 und 9 % einstellt. Die Verklebung der Holzteile erfolgt unter definierten klimatischen Bedingungen bei 23°C und 50 % r.F., wobei der Klebstoff selbst ebenfalls eine Temperatur von 23°C haben soll. Der Klebstoffauftrag erfolgt einseitig mit einem 200µ Spiralrakel. Gefügt werden die Teile nach einer Ablüftezeit von 1 Minute nach Applikation des Klebstoffes (Offene Wartezeit). Es wird ein Pressdruck zwischen 0,3 und 0,5 N/mm² aufgebracht. Nach einer Presszeit von 20 min. werden die gespannten Teile entspannt und unmittelbar danach geprüft. Die Messung selbst erfolgt an einer mechanischen Zerreismaschine, bei der eine Kraftumlenkungsmechanik angebracht wurde, bei der die Prüfmaschine von einer Zugprüfungsmaschine zu einer Druckprüfmaschine umgewandelt werden kann. Zum Spalten der Prüfkörper in der Klebefläche wurde an der Kraftaufnahme ein massiver, polierter Alukeil mit einem Flankenwinkel von 20° montiert, der exakt in die Auskerbung der Prüfkörper passt, ohne dabei den Flankengrund zu berühren. Mit einer Vorschubgeschwindigkeit von 50 mm/min. wurde dann der Aluminiumkeil jeweils in die Auskerbung der Holzprüfkörper mit konstanter Geschwindigkeit gefahren und die Kraft in N ermittelt, die zum Spalten der Klebefuge notwendig war. Die vier Klebefugen werden im Abstand von jeweils 10 Sekunden gespalten. Aus den vier ermittelten Werten der vier Klebstofffugen wird dann das arithmetische Mittel errechnet.
Angabe Kraft in N

### Bestimmung der Spaltfestigkeit (SPF) und des Holzbruches (HB)

Die Prüfung erfolgt an stumpf verleimter massiver, bei 23°C und 50 % relativer Luftfeuchte gelagerter, ungedämpfter und gehobelter Buche (Fagus sylvatica) mit einer Holzfeuchtigkeit von 8 bis 9 %. Dazu werden 5 Buchenhölzer mit den Maßen Länge=20 cm, Breite=4 cm, Dicke=2 cm mit den Schmalseiten so aneinandergeleimt, dass eine Gesamtfläche von 20 mal 20 cm entsteht. Die einzelnen Buchenhölzer sind jeweils am Kopfende 24 mm tief, im Winkel von 20° schräg abgeschnitten, sodass bei der Verleimung der Einzelteile ein gleichschenkliger Keilausschnitt mit einem Gesamtwinkel beider Schenkel von 40° entsteht, der eine Tiefe von 24 mm und eine breite Schulter von 18,5 mm hat. So entsteht an jeder Klebefuge ein Keilausschnitt von 2 cm Breite.

Die Prüfhölzer sind vor der Prüfung für mindestens 2 Wochen unter konstanten Bedingungen bei 23°C 50 % r.F. zu konditionieren, um sicherzustellen, dass sich eine Ausgleichsholzfeuchte zwischen 8 und 9 % einstellt. Die Verklebung der Holzteile erfolgt unter definierten klimatischen Bedingungen bei 23°C und 50 % r.F., wobei der Klebstoff selbst ebenfalls eine Temperatur von 23°C haben soll. Der Klebstoffauftrag erfolgt einseitig mit einem 200µ Spiralrakel. Gefügt werden die Teile nach einer Ablüftezeit von 1 Minute nach Applikation des Klebstoffes (Offene Wartezeit). Es wird ein Pressdruck zwischen 0,3 und 0,5 N/mm² aufgebracht. Nach einer Presszeit von 2 h werden die gespannten Teile entspannt und bei einem Klima von 23°C und 50 % iger Luftfeuchtigkeit über einen Zeitraum von 7 Tagen konditioniert. Danach erfolgt die Messung. Die Messung selbst erfolgt an einer mechanischen Zerreismaschine, bei der eine Kraftumlenkungsmechanik angebracht wurde, bei der die Prüfmaschine von einer Zugprüfungsmaschine zu einer Druckprüfmaschine umgewandelt werden kann. Zum Spalten der Prüfkörper in der Klebefläche wurde an der Kraftaufnahme ein massiver, polierter Alukeil mit einem Flankenwinkel von 20° montiert, der exakt in die Auskerbung der Prüfkörper passt, ohne dabei den Flankengrund zu berühren. Mit einer Vorschubgeschwindigkeit von 50 mm/min. wurde dann der Aluminiumkeil jeweils in die Auskerbung der Holzprüfkörper mit konstanter Geschwindigkeit gefahren und die Kraft in N ermittelt, die zum Spalten der Klebefuge notwendig war. Aus den vier ermittelten Werten der vier Klebstofffugen wird dann das arithmetische Mittel errechnet. Der Anteil an Holzbruch wird ebenfalls als arithmetisches Mittel von vier Fugen visuell ermittelt.
Angabe Kraft in N und Holzbruch in %

### Bestimmung der Wärmefestigkeit :

DIN EN 14257 (September 2006)
Bestimmung der Klebefestigkeit von Längsklebungen im Zugversuch in der Wärme (Watt 91)
Die Angabe erfolgt in N/mm².

### Bestimmung der Wasserfestigkeit :

DIN EN 204 (September 2001)
Klassifizierung von thermoplastischen Holzklebstoffen für nichttragende Anwendungen

Geprüft wurden die Beanspruchungsgruppen D1 Lagerungsfolge 1, D2 Lagerungsfolge 2 und D3 Lagerungsfolge 3.

Die Angabe erfolgt in N/mm².

**Tabelle**

| **Beispiele** | 1 | 2 | 3 | 4 | 5 |
|---|---|---|---|---|---|
| | Basisdispersion ohne Additiv (**nicht erfindungsgemäß**) | Basisdispersion + 1% Glucono-1,5-lacton + 1 % Wasser | Basisdispersion + 2% Glucono-1,5-lacton +2 % Wasser | Basisdispersion + 3% Glucono-1,5-lacton + 3 % Wasser | Basisdispersion + 3% Glucono-1,5-lacton, ohne Wasserzusatz |
| Viskosität nach Brookfield (# 6/20 rpm bei 23°C) [mPas] | 12.150 | 11.100 | 9.300 | 7.400 | 10.150 |
| Offene Zeit 23°C/50 r.F. [Min.] | 8 | 8 | 9 | 10 | 10 |
| MFFT (Minimum Film Forming Temperature) [°C] | 13,0 | 13,5 | 14,0 | 14,0 | 14,5 |
| SPF an massivem Buchenholz (Spaltfestigkeit) [N] | 4750 | 4950 | 4900 | 4850 | 5250 |
| ABG: Abbindegeschwindigkeit (interlaminare Festigkeit) nach 20 Minuten [N] | 3150 | 3625 | 3500 | 3200 | 3325 |
| Holzbruch [%] | 90 | 100 | 100 | 100 | 95 |
| Wärmefestigkeit nach DIN EN 14257 [N/mm²] | 5,4 | 5,5 | 5,7 | 5,8 | 5,3 |
| Prüfungen nach DIN EN 204 (D1-D3) | | | | | |
| D1/1 [N/mm²] | 11,4 | 12,7 | 15,4 | 15,4 | 14,5 |
| D2/2 [N/mm²] | 9,8 | 10,5 | 12,9 | 12,6 | 12,2 |
| D3/3 [N/mm²] | 1,9 | 2,8 | 3 | 3,3 | 3,1 |

## Patentansprüche

1. Wässriger Dispersions-Klebstoff auf der Basis von Polyvinylacetat als Bindemittel, enthaltend weniger als 4 Gew.-% an organischem Lösemittel, **dadurch gekennzeichnet, dass** er 0,1 bis 10,0 Gew.-% eines oder mehrerer oxidierter Kohlenhydrate, bezogen auf die Dispersion, enthält.

2. Wässriger Dispersions-Klebstoff nach Anspruch 1, **dadurch gekennzeichnet, dass** das / die oxidierte(n) Kohlenhydrat(e) ausgewählt wird / werden aus oxidierten Pentosen, Hexosen oder Desoxyzuckern (Desosen) oder deren Mischungen.

3. Wässriger Dispersions-Klebstoff nach Anspruch 2, **dadurch gekennzeichnet, dass** die oxidierte(n) Pentose(n) ausgewählt wird / werden aus oxidierter Arabinose, Xylose, Lyxose, Ribose oder deren Mischungen.

4. Wässriger Dispersions-Klebstoff nach Anspruch 2, **dadurch gekennzeichnet, dass** die oxidierte(n) Hexose(n) ausgewählt wird / werden aus oxidierter Allose, Altrose, Glucose, Mannose, Gulose, Idose, Galaktose, Talose oder deren Mischungen.

5. Wässriger Dispersions-Klebstoff nach Anspruch 2, **dadurch gekennzeichnet, dass** die oxidierte(n) Desose(n) ausgewählt wird / werden aus oxidierter 2-Desoxyribose, Rhamnose, Digitoxose, Fucose oder deren Mischungen.

6. Wässriger Dispersions-Klebstoff nach Anspruch 2, **dadurch gekennzeichnet, dass** die oxidierte(n) Kohlenhydrate ausgewählt wird / werden aus Glucono-1,5-lacton, Glucono-1,4-lacton, Gluconsäure, Mannonsäure, Galactono-1,4-lacton, Gulono-1,4-lacton, Glucurono-1,4-lactone, Glucuronsäure, Mannuronsäure, Galacturonsäure oder deren Mischungen.

7. Wässriger Dispersions-Klebstoff nach Anspruch 1, **dadurch gekennzeichnet, dass** als oxidiertes Kohlenhydrat oxidiertes Dextrin verwendet wird.

8. Wässriger Dispersions-Klebstoff nach mindestens einem der vorhergehenden Ansprüche, enthaltend 0,1 bis 5,0 Gew.%, vorzugsweise 0,5 bis 5,0 Gew.%, besonders bevorzugt 0,5 bis 3,0 Gew.% oxidierte(s) Kohlenhydrat(e).

9. Wässriger Dispersions-Klebstoff nach mindestens einem der vorhergehenden Ansprüche, **dadurch gekennzeichnet, dass** die verwendeten organischen Lösemittel aus solchen mit einem Siedepunkt bei Normaldruck von mehr als 160 °C, insbesondere mehr als 200 °C und vor allem mehr als 240 °C ausgewählt werden.

10. Verwendung des Dispersions-Klebstoffes nach mindestens einem der vorhergehenden Ansprüche zum Vergeben von Holz- und Holzwerkstoffen oder deren Kombinationsverklebungen.

## Claims

1. An aqueous dispersion adhesive based on polyvinyl acetate as a binder, containing less than 4 wt.% of organic solvent, **characterised in that** it contains 0.1 to 10.0 wt.% of one or more oxidized carbohydrate(s), relative to the dispersion.

2. The aqueous dispersion adhesive according to claim 1, **characterised in that** the oxidized carbohydrate(s) is/are selected from oxidized pentoses, hexoses or deoxy sugars (desoses) or mixtures thereof.

3. The aqueous dispersion adhesive according to claim 2, **characterised in that** the oxidized pentose(s) is/are selected from oxidized arabinose, xylose, lyxose, ribose or mixtures thereof.

4. The aqueous dispersion adhesive according to claim 2, **characterised in that** the oxidized hexose(s) is/are selected from oxidized allose, altrose, glucose, mannose, gulose, idose, galactose, talose or mixtures thereof.

5. The aqueous dispersion adhesive according to claim 2, **characterised in that** the oxidized desose(s) is/are selected from oxidized 2-deoxyribose, rhamnose, digitoxose, fucose or mixtures thereof.

6. The aqueous dispersion adhesive according to claim 2, **characterised in that** the oxidized carbohydrate(s) is/are selected from glucono-1,5-lactone, glucono-1,4-lactone, gluconic acid, mannonic acid, galactono-1,4-lactone, gulono-1,4-lactone, glucurono-1,4-lactone, glucuronic acid, mannuronic acid, galacturonic acid or mixtures thereof.

7. The aqueous dispersion adhesive according to claim 1, **characterised in that** oxidized dextrin is used as the oxidized carbohydrate.

8. The aqueous dispersion adhesive according to at least one of the preceding claims, containing 0.1 to 5.0 wt.%, preferably 0.5 to 5.0 wt.%, particularly preferably 0.5 to 3.0 wt.%, of oxidized carbohydrate(s).

9. The aqueous dispersion adhesive according to at least one of the preceding claims, **characterised in that** the organic solvents used are selected from those having a boiling point under normal pressure of over 160° C, in particular over 200° C and above all over 240° C.

10. Use of the dispersion adhesive according to at least one of the preceding claims for bonding wood and wood-based materials or combination bonds thereof.

## Revendications

1. Adhésif en dispersion aqueuse à base de poly(acétate de vinyle) comme liant, contenant moins de 4% en poids de solvant organique, **caractérisé en ce qu'**il contient 0,1 à 10,0% en poids d'un ou de plusieurs hydrates de carbone oxydés, par rapport à la dispersion.

2. Adhésif en dispersion aqueuse selon la revendication 1, **caractérisé en ce que** le/les hydrate(s) de carbone oxydé(s) est/sont choisi(s) parmi les pentoses oxydés, les hexoses oxydés ou les sucres désoxy (désoses) oxydés ou leurs mélanges.

3. Adhésif en dispersion aqueuse selon la revendication 2, **caractérisé en ce que** le(s) pentose(s) oxydé(s) est/sont choisi(s) parmi l'arabinose oxydé, le xylose oxydé, le lyxose oxydé, le ribose oxydé ou leurs mélanges.

4. Adhésif en dispersion aqueuse selon la revendication 2, **caractérisé en ce que** le(s) hexose(s) oxydé(s) sont choisi(s) parmi l'allose oxydé, l'altrose oxydé, le glucose oxydé, le mannose oxydé, le gulose oxydé, l'idose oxydé, le galactose oxydé, le talose oxydé ou leurs mélanges.

5. Adhésif en dispersion aqueuse selon la revendication 2, **caractérisé en ce que** le(s) désose(s) oxydé(s) est/sont choisi(s) parmi le 2-désoxyribose oxydé, le rhamnose oxydé, le digitoxose oxydé, le fucose oxydé ou leurs mélanges.

6. Adhésif en dispersion aqueuse selon la revendication 2, **caractérisé en ce que** le(s) hydrate(s) de carbone oxydé(s) est/sont choisi(s) parmi la glucono-1,5-lactone, la glucono-1,4-lactone, l'acide gluconique, l'acide mannonique, la galactono-1,4-lactone, la gulono-1,4-lactone, la glucurono-1,4-lactone, l'acide glucuronique, l'acide mannuronique, l'acide galacturonique ou leurs mélanges.

7. Adhésif en dispersion aqueuse selon la revendication 1, **caractérisé en ce qu'**on utilise, comme hydrate de carbone oxydé, de la dextrine oxydée.

8. Adhésif en dispersion aqueuse selon au moins l'une quelconque des revendications précédentes, contenant 0,1 à 5,0% en poids, de préférence 0,5 à 5,0% en poids, de manière particulièrement préférée 0,5 à 3,0% en poids d'hydrate(s) de carbone oxydé(s).

9. Adhésif en dispersion aqueuse selon au moins l'une quelconque des revendications précédentes, **caractérisé en ce que** les solvants organiques utilisés sont choisis parmi ceux présentant un point d'ébullition, à pression normale, de plus de 160°C, en particulier de plus de 200°C et surtout de plus de 240°C.

10. Utilisation de l'adhésif en dispersion selon au moins l'une quelconque des revendications précédentes pour le collage du bois et de matériaux à base de bois ou leurs collages combinés.
